Europäisches Patentamt

European Patent Office

Office européen des brevets

(11) Publication number: **0 513 808 A2**

## EUROPEAN PATENT APPLICATION

(21) Application number: **92108210.3**

(22) Date of filing: **15.05.92**

(51) Int. Cl.⁵: **C08F 10/00**, C08F 4/602,
C07F 5/06, C08F 4/44

(30) Priority: **17.05.91 US 701732**

(43) Date of publication of application:
**19.11.92 Bulletin 92/47**

(84) Designated Contracting States:
**AT BE CH DE DK ES FR GB GR IT LI LU NL SE**

(71) Applicant: **PHILLIPS PETROLEUM COMPANY
5th and Keeler
Bartlesville Oklahoma 74004(US)**

(72) Inventor: **Pettijohn, Ted Matthew
4500 Stonehenge Drive
Bartlesville, OK 74006(US)**
Inventor: **Hsieh, Henry Lien
1406 Meadow Lane
Bartlesville, OK 74006(US)**

(74) Representative: **Dost, Wolfgang,
Dr.rer.nat.,Dipl.-Chem. et al
Patent- & Rechtsanwälte Bardehle .
Pagenberg . Dost . Altenburg . Frohwitter .
Geissler & Partner Galileiplatz 1 Postfach 86
06 20
W-8000 München 86(DE)**

(54) **Olefin polymerization.**

(57) A process is disclosed for polymerizing olefins employing a special aluminoxane composition in which the aluminoxane is prepared by reacting an organoaluminum compound with a metal compound containing water of hydration wherein enough of the solids in the resulting composition are retained to result in an aluminoxane composition which will provide improved polymerization activity.

EP 0 513 808 A2

Field of the Invention

The present invention relates to the polymerization of olefins. In a more specific aspect, the present invention relates to olefin polymerizations conducted in the presence of an aluminoxane catalyst component.

Background of the Invention

It has been known for some time that olefins such as mono-unsaturated alpha olefins can be polymerized with a catalyst composition consisting of a mixture of two components, such as (A) a compound of a transition metal of Groups IVA, VA, and VIA and (B) a compound of a metal of Groups IA, IIA, and IIIB of the Periodic Chart of Elements. U.S. 3,242,099 disclosed that poly(hydrocarbylaluminum oxides), sometimes referred to simply as "aluminoxanes", can be employed as the (b) component mentioned above.

Various methods of preparing aluminoxanes are known. One of the methods of preparing aluminoxanes has involved the contacting of organic aluminum compounds with compounds containing water of crystallization. Some examples of such processes are disclosed in U.S. 4,544,762; U.S. 4,665,208; JP 148,491; and Russian Inventors Certificate 556,844, the disclosures of which are incorporated herein by reference.

An object of the present invention is to provide a process for the polymerization of olefins which provides improved activity.

Another object of the present invention is to provide a process for the polymerization of olefin in which various physical properties such as molecular weight and molecular weight distribution can be varied by varying the components of the catalyst system.

Still another object is to provide process which can be carried out using lower levels of aluminoxane to produce a given yield of polymer.

Other aspects, objects, and advantages of the present invention will be apparent to those skilled in the art after reading the following disclosure.

Summary of the Invention

In accordance with the present invention, there is provided a process for the polymerization of olefins wherein the polymerization is conducted in the presence of an aluminoxane cocatalyst wherein the aluminoxane cocatalyst is the product resulting from the reaction of an organoaluminum compound with an inorganic metal compound containing water of hydration, wherein the metal is a metal which is not reduced during the aluminoxane preparation, and wherein enough said metal is left in the resulting composition to result in improved activity over a catalyst which would result if the solids were separated from the aluminoxane.

Detailed Description

The present invention is considered to be applicable generally to any olefin polymerization which uses an aluminoxane type cocatalyst. Typically, the olefin polymerization is conducted using the inventive aluminoxane and a catalyst comprising a transition metal of Groups IVB, VB, and VIB, of the Periodic Table. A wide range of transition metal-containing catalysts are known in the art which can be used with aluminoxane. Generally, the transition metal catalysts that are employed with an aluminoxane cocatalyst are transition metal compounds of metals such as titanium, zirconium, hafnium, cerium, vanadium, niobium, tantalum, chromium, molybdenum, tungsten, thorium and uranium. Examples of such compounds include those represented by the formula $MX_n$ in which M represents the transition metal atom, X represents a halogen atom or an organic group, such as an alkoxy or ester radical, and n is the valence state of the transition metal. Illustrative of some of the transition metal compounds of this type include, for example, vanadium dichloride, vanadium trichloride, vanadium tetrachloride, vanadium trifluoride, vanadium tetrafluoride, vanadium pentafluoride, vanadium triiodide, vanadyl chloride, titanium dibromide, titanium tribromide, titanium tetrabromide, titanium dichloride, titanium trichloride, titanium tetrachloride, titanium trifluoride, titanium tetrafluoride, titanium diiodide, titanium tetraiodide, zirconium dibromide, zirconium tribromide, zirconium tetrabromide, zirconium dichloride, zirconium trichloride, zirconium tetrachloride, zirconium tetrafluoride, zirconium tetraiodide, niobium pentabromide, niobium pentachloride, niobium pentafluoride, tantalum pentabromide, tantalum pentachloride, tantalum pentafluoride, chromous bromide, chromic bromide, chromous chloride, chromic chloride, chromous fluoride, chromic fluoride, molybdenum dibromide, molybdenum tribromide, molybdenum tetrabromide, molybdenum dichloride, molybdenum trichloride, molybdenum tetrachloride, molybdenum pentachloride, molybdenum hexafluoride, and the like. Among the organic compounds of the transition metals one can mention chromium acetate, chromium (III) oxy-2-ethylhexanoate, chromium (III) 2-ethylhexanoate, chromium (III) dichloroethylhexanoate, chromium (II) 2-ethylhexanoate, titanium (IV) 2-ethylhexanoate, zirconyl tetrabutoxide, chromium (III) isobutoxide, titanium tetraethoxide, dicyclopentadienyltitanium dichloride, dicyclopentadienyltitanium difluoride, dicyclopentadienylvanadium dichloride, zirconyl acetate, uranyl butyrate, vanadyl acetylacetonate, chromium acetylacetonate, zirconyl acetylacetonate, and the like. The aluminoxane of the present invention is particularly useful when used in combination with a transition metal metallocene compound.

The word "metallocene", is generally used to refer to a cyclopentadienide, a metal derivative of cyclopentadiene or substituted pentadienes. As a general rule, metallocenes are prepared from Group IVB or VB metals, preferably titanium, zirconium, hafnium, and vanadium, with titanium, zirconium, and hafnium being especially preferred. The cyclopentadienyl ring can be unsubstituted or can contain substituents such as, for example hydrocarbyl substituents, in addition the substituents can form additional rings attached to the cyclopentadienyl ring. Some typical examples of what is meant by the word "metallocene" are disclosed in column 6, line 19 through column 8, line 18 of U.S. Patent 4,701,432, the disclosure of which is incorporated herein by reference. A few specific examples of metallocenes include bis(cyclopentadienyl) titanium dimethyl, bis-cyclopentadienyl titanium diphenyl, bis(cyclopentadienyl) dichloride, bis(indenyl) titanium dichloride, bis(cyclopentadienyl) zirconium dichloride, ethylene-bis-(4,5,6,7-tetrahydroindenyl)-zirconium dichloride, ethylene bis(indenyl) zirconium dichloride, ethylene bis(indenyl) hafnium dichloride, bis-(fluorenyl) zirconium dimethyl, 1-(cyclopentadienyl)-1-fluorenyl-dimethyl methylene zirconium dichloride, and the like. Typical metallocenes are also disclosed in column 4, line 48 through column 5, line 40 of U.S. 4,892,851, the disclosure of which is incorporated herein by reference.

The catalyst system, in addition to the transition metal containing component and the inventive aluminoxane, can include a third component comprising an organometallic compound wherein the metal is selected from Groups IA, IIA, or IIIA of the Periodic Table. Some typical examples include sodium alkyls, magnesium alkyls, and aluminum alkyls. Some specific examples include trimethylaluminum, triethylaluminum, dimethylaluminum chloride, diethylaluminum chloride, ethylaluminum sesquichloride, triisobutylaluminum, triisopropylaluminum, and the like. It has been noted that the addition of a trialkylaluminum compound to the catalyst system can result in an increase in the production of lower molecular weight polymer, thus enhancing the production of bimodal molecular weight distribution resins.

Methods of preparing aluminoxanes are well known in the art, even the preparing the aluminoxanes by use of salts containing water of hydration. The process used in the present invention differs in that a significant amount of the metal compound which provided the water hydration is retained in the aluminoxane that is used in the polymerization.

In accordance with the present invention, any suitable organoaluminum compound can be used for preparing the aluminoxane, also sometimes referred to as "poly(hydrocarbylaluminum oxide)". Typical organoaluminum compounds include hydrocarbylaluminum compounds such as trialkylaluminum compounds, triarylaluminum compounds, dialkylaluminum hydrides compound, diarylaluminum hydrides compounds, alkylarylaluminum hydrides compounds, monoalkylaluminum dihydride compounds, monoarylaluminum dihydride compounds and the like. Specific examples of such generic types of organoaluminum compounds include trimethylaluminum, triethylaluminum, tripropylaluminum, triisopropylaluminum, tri-n-butylaluminum, triisobutylaluminum, tridodecylaluminum, tribenzylaluminum, triphenylaluminum, trinapthylaluminum, tritoluylaluminum, dimethylaluminum hydride, didecylaluminum hydride, diphenylaluminum hydride, dixylylaluminum hydride, methylphenylaluminum monohydride, methylaluminum dihydride, phenylaluminum dihydride, and the like.

As is known by those skilled in the art, some of these organoaluminum compounds are capable of potentially explosive reactions when combined with water, accordingly necessary precautions should be taken in the reaction of the organoaluminum compounds with the metal hydrates. Typically the process would involve dissolving the organoaluminum compound, preferably trimethylaluminum, in an inert aliphatic or aromatic solvent which is then slowly added to a stirred slurry of the hydrated metal salt in a suitable organic diluent, which is typically also a solvent for the organoaluminum compound.

Such reactions can be carried out over a wide range of temperatures depending upon the particular reactants employed. Typically the temperature would be in the range of about -30°C to about 110°C, more preferably about -10°C to about 50°C. Preferably the weight ratio of the liquid diluent to salt in the preparation of the slurry of salt would be in the range of from about 100:1 to about 4:1. Typical examples of suitable dry organic liquids for forming that slurry include toluene, hexene, heptane, octene, cyclohexane, and the like.

The ratio by volume between the inert solvent and the organoaluminum compound can also vary over a wide range, typically it would be in the range of from about 1:1 to about 50:1 or greater, and more preferably about 5:1 to about 10:1. The molar ratio of the organoaluminum to the water in the hydrated salt is preferably at least about 0.5 to 1, more preferably at least about 1 to 1. Generally, the mole ratio of the organoaluminum compound to the water in the hydrate salt would not be greater than about 2 to 1.

Completion of the reaction between the organoaluminum compound and the hydrated salt is generally indicated by the cessation of alkane production. Generally the reaction time will be between about 0.5 about 200 hours, preferably between about 10 and 40 hours. The reaction is controlled primarily by the rate of the combination of the organoaluminum compound with the hydrated salt. Since the rate at which the water or crystallization is released by hydrated salts generally increases with temperature, an increase in temperature or a rapid addition of the organoaluminum compound may lead to an uncontrollably fast reaction unless the rate of reaction is limited by other factors such as the rate of the combination of the organoaluminum compound and the hydrated salt. Generally the organoaluminum compound addition would not exceed about 120th of a mole per minute for each liter of reaction medium. Thus typically if one employed an original hydrated salt slurry containing about 1 to 10 moles of water per liter the time required for the organoaluminum addition would be typically be in the range of about 20 to 200 minutes, more preferably about 30 to 100 minutes.

The solvents employed in dissolving the organoaluminum compounds can be any of the suitable inert organic solvents. Preferably aliphatic or aromatic solvents are employed such as toluene, benzene, hexane, heptane, isooctane, cyclohexane, methylcyclohexane, decane, and the like and preferably the same organic liquid is employed for slurrying the hydrated salt. The currently preferred solvents are toluene and hexane.

The metal compound containing the water of crystallization is selected from suitable compounds of metals of Groups IA, IIA, IIB, IIIA, and VIII of the Periodic Table and compounds of metals having atomic numbers in the range of 58 to 71. Accordingly, some specific examples of such metals include magnesium, iron, aluminum, neodymium, cerium, nickel, lanthanum, samarium, europium, gadolinium, terbium, dysprosium, holmium, erbium, ytterbium, zinc, and sodium. Some specific examples of such hydrated salts include $FeSO_4 \cdot 7\ H_2O$, $MgSO_4 \cdot 7\ H_2O$, $ZnSO_4 \cdot 7\ H_2O$, $Na_2SO_4 \cdot 10\ H_2O$, $Na_2SO_4 \cdot H_2O$, $Na_3PO_4 \cdot 12\ H_2O$, $NdCl_3 \cdot 6\ H_2O$ and $MgCl_2 \cdot 6\ H_2O$ and the like.

In accordance with the present invention, it has been discovered that if the metal compound that provided the hydration is one which is not reduced during the aluminoxane formation, the retention of the metal in the aluminoxane can improve the activity of the overall catalyst system. Although there is no intention to be bound by theory, it is considered that the metal may act as a support which increases the rate of reaction and/or increases the number of catalytically active sites available.

The polymerization catalyst system can be prepared by procedures known in the art by adding the catalyst components to a substantially inert suitable organic polymerization liquid diluent. Typically, the metal containing aluminoxane solution is added to the polymerization diluent then the transition metal-containing catalyst is added to this diluted mixture.

The organic liquid diluents useful in the polymerization reaction generally include the same type of liquid diluents employed in producing the aluminoxane.

The relative amounts of the transition metal-containing catalyst to the aluminoxane and to the other organoaluminum compound, if employed, can vary over a wide range. Generally, such catalyst system components can be employed in the same amounts as they have been employed in the past by those using an aluminoxane cocatalyst which has had the metals removed therefrom. Generally, the mole ratio of the aluminum in the aluminoxane to the transition metal of the transition metal-containing catalyst would be in the range of about 5:1 to about 100,000:1, more preferably from about 30:1 to about 10,000:1, and for certain polymers about 30:1 to about 60:1.

By varying the ratios of the components used in preparing the catalyst complex, the components employed, or the temperature, pressure, and time reaction, one can vary certain properties of the polymers produced. For example, it has been noted that varying the Al/transition metal atom ratio can vary the molecular weight distribution. High ratios give narrow distributions, i.e. heterogenity index (HI) values in the range of 2 to 3. Low ratios produce broader and in some cases even multimodal molecular weight distributions. HI's in the range of 4 to 14.6 have been noted.

Typically the polymerizations will be carried out at temperatures in the range of from shout -10°C or lower up to about 100°C. More preferable reaction temperatures are in the range of from about 40°C to about 80°C. The pressure can be varied from subatmospheric pressure using an inert gas as diluent preferably, however, the reaction is carried out at a pressure above atmospheric to 30 atmospheres. Hydrogen can often be used with such catalyst systems to affect the average molecular weight of the polymer produced.

The catalyst systems can be used to polymerize a wide range of olefins. The invention is particularly useful for the polymerization of one or more aliphatic alpha-olefins containing 2 to about 10 carbon atoms. Some examples of such alpha-olefins include ethylene, propylene, butene-1, pentene-1, 3-methylbutene-1, hexene-1, 4-methylpentene-1, 3-ethylbutene-1, 3-methylpentene-1, heptene, octene, decene-1, 4,-dimethyl-1-pentene, and the like, including dicycloheptene such as bicyclohept-[2.2.1]-ene and the hydrocarbyl derivatives thereof. In as much as the catalysts are air and moisture sensitive, it is preferred to use monomers of high purity and to handle the catalyst and polymerization diluents and the like under conditions which take this into account.

The polymerization processes of the present invention are capable of producing a wide variety of polyolefins having a wide variety of physical characteristics. Further, not only homopolymers can be produced, but also copolymers or terpolymers can be produced by employing a plurality of olefin monomers.

After the polymerization is complete, the catalyst is deactivated using techniques of the type known by those skilled in the art and the polymer is recovered and purified using conventional techniques.

A further understanding of the present invention, its aspects, objects, and advantages will be provided by the following examples which illustrate certain embodiments of the present invention. In the following examples the solvents employed such as toluene and cyclohexane were purged with nitrogen and then dried by storage over molecular sieves under nitrogen. All the reagents were of the highest purity commercially available and were used as received unless noted otherwise. Hydrocarbon solutions of the metal alkyls were stored under nitrogen and their original containers or in capped pop bottles. The catalyst and catalyst components were prepared, handled, and stored under anaerobic conditions using standard Schlenk techniques.

The aluminoxanes in the following examples were prepared by reacting the selected hydrated metal salt with a trialkylaluminum in a 1:1 $Al/H_2O$ molar ratio. The trialkylaluminum was slowly added to a stirred slurry of the hydrated metal salt and toluene at approximately $0°C$. The reaction was continued until gas evolution ceased, then the reaction mixture was allowed to warm to room temperature. The resulting reaction solution was diluted to a known volume. In the inventive runs a representative mixture of the diluted aluminoxane was aliquoted for use in the polymerization reactions. In the comparative runs the aluminoxane was separated from the solids by decanting and the liquid only was used.

Unless indicated otherwise the polymerizations were conducted at $50°C$. The polymerization reactions were performed in a 1 liter, stirred autoclave. Prior to the polymerizations the autoclave was washed thoroughly with dry cyclohexane and purged with nitrogen. The reaction solvent was added to the reactor and the desired polymerization temperature maintained. The aluminum-containing cocatalyst and the transition metal catalyst were charged in that order under a counterflow of ethylene. When hydrogen was also used, the catalysts were charged under a counterflow of hydrogen.

Example I

A number of runs were carried out using aluminoxane prepared by reacting trimethylaluminum with $FeSO_4 \cdot 7\ H_2O$. The polymerization runs were conducted using the resulting methylaluminoxane (MAO) either with the solids removed or with the solids intact. In some runs trimethylaluminum (TMA) was used in combination with MAO. The catalyst was bis(cyclopentadienyl) zirconium dichloride. The polymerization variables and the results are summarized in Table I.

5

Table I

| Run | MAO Solids | MAO mmol | TMA mmol | Zr mmol | Al/Zr | Time (hr.) | Yield (g) | Activity* | MI | HLMI/MI | Density |
|---|---|---|---|---|---|---|---|---|---|---|---|
| 1 | Removed | 2 | 0 | $2 \times 10^{-4}$ | 10000 | 1 | 8.72 | 480 | -- | -- | -- |
| 2 | Removed | 2 | 1 | $2 \times 10^{-4}$ | 15000 | 1 | 6.47 | 350 | -- | -- | -- |
| 3 | Retained | 2 | 0 | $2 \times 10^{-4}$ | 10000 | 1 | 13.66 | 750 | 0.02 | 42 | 0.9546 |
| 4 | Removed | 3 | 0 | $5 \times 10^{-2}$ | 60 | 0.5 | 22.30 | 9.8 | 0.04 | 49 | 0.9575 |
| 5 | Retained | 6 | 0 | $1 \times 10^{-1}$ | 60 | 0.25 | 55.96 | 25 | 0.12 | 80 | 0.9676 |
| 6 | Retained | 0.6 | 0 | $1 \times 10^{-2}$ | 60 | 0.5 | 21.18 | 46 | 0.01 | 140 | -- |
| 7 | Retained | 6 | 3 | $1 \times 10^{-1}$ | 90 | 0.5 | 82.43 | 18 | 0.87 | 83 | 0.9707 |
| 8 | Retained | 3 | 1.5 | $5 \times 10^{-2}$ | 90 | 0.5 | 75.58 | 33 | 0.39 | 93 | 0.9682 |
| 9 | Retained | 6 | 0 | $1 \times 10^{-2}$ | 600 | 0.25 | 51.27 | 220 | 1.61 | 41 | 0.9661 |

* kg polymer/g Zr/hr

A comparison of runs 1 through 3 in Table I demonstrate that the use of the inventive aluminoxane containing the metal of the salt which provided the hydrate provides a significant improvement in the overall activity of the catalyst system. The same is demonstrated by comparing runs 4 through 6 which were carried out using a much lower level of aluminoxane.

Runs 7 and 8 illustrate polymerizations in which trimethylaluminum was also employed with the

6

inventive catalyst system. This had a significant effect upon the molecular weight of the polymer formed, a higher melt index, i.e. lower molecular weight polymer was produced when TMA was used.

The polymer produced in run 3 had a HI of 2.85. The polymer produced in run 5 had a HI of 11.8. The polymer produced in run 7 had a HI of 11.4. The term HI refers to the weight average molecular weight of the polymer divided by the number average molecular weight, the values of which were determined by GPC, in this case.

Example II

Another series of runs were carried out preparing methylaluminoxane by reacting trimethylaluminum with neodymium trichloride hexahydrate. The resulting aluminoxane was then used either with or without the neodymium present to evaluate the effects during the polymerization of ethylene with bis(cyclopentadienyl) zirconium dichloride as the transition metal catalyst. The variables employed and the results are summarized in Table II.

Table II

| Run | MAO Solids | MAO mmol | TMA mmol | Zr mmol | Al/Zr | Time (hr.) | Yield (g) | Activity* | MI | HLMI/MI | Density |
|---|---|---|---|---|---|---|---|---|---|---|---|
| 10 | Removed | 1.2 | 0 | $2 \times 10^{-4}$ | 6000 | 1 | 0.34 | 19 | -- | -- | -- |
| 11 | Retained | 1.2 | 0 | $2 \times 10^{-4}$ | 6000 | 1 | 7.87 | 430 | 0.04 | 32 | 0.9591 |
| 12 | Removed | 1.2 | 0.6 | $2 \times 10^{-4}$ | 9000 | 1 | 0.53 | 29 | -- | -- | -- |
| 13 | Retained | 1.2 | 0.6 | $2 \times 10^{-4}$ | 9000 | 1 | 3.93 | 220 | -- | -- | -- |
| 14 | Removed | 6 | 0 | $1 \times 10^{-1}$ | 60 | 0.5 | 49.80 | 11 | 0.23 | 83 | 0.9650 |
| 15 | Retained | 6 | 0 | $1 \times 10^{-1}$ | 60 | 0.5 | 86.14 | 19 | 0.27 | 44 | 0.9630 |
| 16 | Retained | 0.6 | 0 | $1 \times 10^{-2}$ | 60 | 0.5 | 12.56 | 28 | 0.09 | 54 | -- |
| 17 | Removed | 6 | 3 | $1 \times 10^{-1}$ | 90 | 0.5 | 27.84 | 6.1 | 0.35 | 59 | 0.9698 |
| 18 | Retained | 6 | 3 | $1 \times 10^{-1}$ | 90 | 0.5 | 98.60 | 22 | 0.81 | 65 | 0.9730 |

* kg polymer/g Zr/hr

Here again, it will be noted that the aluminoxane from which the metal salt had not been removed provided the best activity. The HI's of the polymers of runs 11, 13, 15, and 18 were 3.01, 3.16, 14.8, and 14.6 respectively. The polymer of run 18 had a distinctly bimodal molecular weight distribution.

Example III

8

Another series of polymerizations were carried out using as the catalyst system only certain of the reactants that were employed in the catalyst systems of the polymerizations of Example II to compare the affects of the various components of the catalysts systems. The polymerization variables and the results are summarized in Table III.

Table III

| Run | Inventive MAO mmol | NdCl$_3$ mmol | TMA mmol | Zr mmol | Al/Zr | Time (hr.) | Yield (g) | Activity* |
|---|---|---|---|---|---|---|---|---|
| 19 | 0 | 0 | 6 | $2 \times 10^{-1}$ | 30 | 3 | 2.80 | 51 |
| 20 | 0 | 2 | 6 | $2 \times 10^{-1}$ | 30 | 3 | 22.64 | 414 |
| 21 | 0 | 1 | 3 | 0 | -- | 3 | 0 | 0 |
| 22 | 1.2 | .2 | 0 | 0 | -- | 1 | 0.20 | -- |

* g polymer/g Zr/hr

The polymerizations of runs 19-22 were carried out at 100°C whereas all the other polymerizations discussed in the examples thus far were carried out at 50°C. Run 19 is a polymerization in which the catalyst system consisted only of trimethylaluminum and the zirconocene. As shown by the results, this catalyst system was of very low activity especially when one considers the higher temperature of the polymerization and when one considers that productivity is recorded as grams of polymer per gram of Zr rather than kilograms of polymer per gram of Zr. Run 20 is a polymerization in which the catalyst system consisted of only neodymium trichloride, trimethylaluminum, and the bis(cyclopentadienyl) zirconium dichloride. This system was more active than the system used in run 19 but was still considerably less active than any of the systems which included an aluminoxane and the zirconocene. Run 21 was a polymerization using as a catalyst system only neodymium trichloride and trimethylaluminum. This catalyst system was ineffective as a polymerization catalyst system. Run 22 employed a catalyst system consisting only of the aluminoxane prepared from the neodymium trichloride hexahydrate with the solids retained. No transition metal compound was used. That catalyst system was also not particularly effective.

Example IV

In this series, the aluminoxane used was one prepared by reacting trimethylaluminum with magnesium dichloride hexahydrate and the resulting aluminoxane was employed with and without the magnesium chloride removed. The transition metal component again was biscyclopentadienyl zirconium dichloride. The variables used in the polymerization runs and the results are summarized in Table IV.

Table IV

| Run | MAO Solids | MAO mmol | Zr mmol | Al/Zr | Time (hr.) | Yield (g) | Activity* | MI | HLMI/MI | Density |
|---|---|---|---|---|---|---|---|---|---|---|
| 23 | Removed | 3 | 5x10⁻² | 60 | 0.5 | 18.52 | 8.1 | 0.06 | 43 | 0.9580 |
| 24 | Retained | 3 | 5x10⁻² | 60 | 0.5 | 33.46 | 15 | 0.03 | 47 | 0.9578 |
| 25 | Removed NdCl₃ Added | 3 | 5x10⁻² | 60 | 0.5 | 17.52 | 7.7 | 0.09 | 37 | 0.9655 |

* kg polymer/g Zr/hr

Runs 23 and 24 demonstrate that the catalyst system with the higher activity was the one which used the aluminoxane which did not have the solids removed therefrom. Run 25 employed the same aluminoxane as employed in run 23 except in the polymerization anhydrous neodymium chloride was also added. The results show that the addition of the neodymium salt did not provide any improvement in the activity of the catalyst system.

10

Example V

In this case, additional polymerizations were carried out using the bis(cyclopentadienyl) zirconium dichloride and a methylaluminoxane prepared from copper sulfate and a hydrate. In one run an aluminoxane was employed in which the solids had been removed and in another run an aluminoxane was used in which the solids were retained. The polymerization conditions and the results are summarized in Table V.

Table V

| Run | MAO Solids | MAO mmol | Zr mmol | Al/Zr | Time (hr.) | Yield (g) | Activity* | MI | HLMI/MI | Density |
|---|---|---|---|---|---|---|---|---|---|---|
| 26 | Removed | 6 | 0.1 | 60 | 0.5 | 46.07 | 10 | 0.10 | 53 | 0.9566 |
| 27 | Retained | 6 | 0.1 | 60 | 1.0 | 35.15 | 3.9 | 0.12 | 47 | 0.9676 |

* kg polymer/g Zr/hr

The results obtained from these two polymerization runs show a quite different trend than those from the previous polymerization runs, namely, the runs employing the aluminoxane in which the metal solids were retained was less active than the polymerization employing an aluminoxane in which the solids were removed. It is considered that the difference is due to the fact that copper differs from the other metal salts used in the preceding examples in that copper can be reduced during the preparation of the aluminoxane.

Example VI

In this case, the polymerizations were carried out using the same zirconium compound but with an ethylaluminoxane (EAO) prepared by reacting triethylaluminum with the hexahydrate salt of neodymium chloride. Polymerizations were conducted at 50°C using either the ethylaluminoxane as prepared, i.e. containing solids, or the ethylaluminoxane with the solids removed. The polymerization conditions and the results are summarized in Table VI.

Table VI

| Run | EAO Solids | EAO mmol | Zr mmol | Al/Zr | Time (hr) | Yield (g) | Activity* |
|-----|-----------|----------|---------|-------|-----------|-----------|-----------|
| 28 | Removed | 6 | 0.1 | 60 | 1 | 8.00 | 0.9 |
| 29 | Retained | 6 | 0.1 | 60 | 1 | 10.05 | 1.1 |

* kg polymer/g Zr/hr

A comparison of runs 28 and 29 demonstrates that again if one uses the aluminoxane with the solides retained, one obtains a catalyst system which is more active. The results also demonstrate that the ethylaluminoxane in general is not as active with that transition metal compound as the methylaluminoxane. This can be seen by comparing the activities shown in Table V with those shown in Table II.

**Claims**

1.  A process for the polymerization of olefins, characterized by subjection to polymerization at least one olefin in the presence of a catalyst system comprising an aluminoxane composition, said aluminoxane composition being prepared by reacting an organoaluminum compound with at least one metal compound containing water of hydration, wherein enough of the solids are left in the resulting composition to result in improved polymerization activity as compared to a polymerization in which the solids were separated from the resulting aluminoxane, wherein the metal of said metal compound is a metal which is not reduced during the formation of the aluminoxane.

2.  The process of claim 1 wherein said aluminoxane composition contains substantially all of the solids that were present after the reaction of the organoaluminum compound and the metal compound.

3.  The process of claim 1 or 2 wherein said organoaluminum compound is hydrocarbylaluminum compound, preferably a trihydrocarbylaluminum compound.

4.  The process of claim 3 wherein said trihydrocarbylaluminum compound is a trialkyl compound in which each alkyl group has 1 to 4 carbon atoms, preferably trimethylaluminum.

5.  The process of any of the preceding claims wherein the metal of the metal compound containing water of hydration is selected from metals of Groups IA, IIA, IIB, IIIA, VIII, and metals having atomic numbers in the range of 58 to 71 inclusive.

6.  The process of any of the preceding claims wherein the mole ratio of the aluminum in said organo aluminum compound to water of hydration in said metal compound is at least about 0.5:1, preferably at least about 1:1.

7.  The process of any of the preceding claims wherein the metal of said metal compound is selected from magnesium, iron, aluminum, neodymium, cerium, nickel, lanthanum, samarium, europium, gadolinium, terbium, dysprosium, holmium, erbium, ytterbium, zinc and sodium.

8.  The process of claim 7 wherein the metal of said metal compound is selected from magnesium, iron and neodymium.

9.  The process of claim 8 wherein said catalyst system further comprises at least one metallocene of a metal selected from Group IVB.

10. The process of claim 9 wherein said metallocene is bis(cyclopentadienyl) zirconium dichloride.

11. The process of claim 10 wherein the gram/atom ratio of the aluminum in said aluminoxane to the zirconium in said zirconocene is in the range of 5:1 to $10^5$:1, preferably from 30:1 to 60:1.

12. The process of any of claims 9 to 11 wherein said metal compound containing water of hydration is neodymium trichloride, iron sulfate or magnesium dichloride.

13. The process of any of claims 9 to 12 wherein said catalyst system further includes trimethylaluminum.